# EUROPÄISCHE PATENTSCHRIFT

(11) **EP 2 431 194 B1**
(45) Veröffentlichungstag und Bekanntmachung des Hinweises auf die Patenterteilung: **04.06.2014**
(21) Anmeldenummer: 11177745.4
(22) Anmeldetag: 17.08.2011
(51) Int. Cl.: B60C 9/00, B60C 19/08, D02G 3/48, D07B 1/00

(54) **Fahrzeugluftreifen**
Pneumatic tyres for a vehicle
Pneus de véhicule

(30) Priorität: 16.09.2010 DE 102010037574
(43) Veröffentlichungstag der Anmeldung: 21.03.2012
(73) Patentinhaber: Continental Reifen Deutschland GmbH, 30165 Hannover (DE)
(72) Erfinder: Justine, Carole, 31535 Scharrel (DE); Krüger, Jörn, 30926 Seelze (DE)
(74) Vertreter: Finger, Karsten

(56) Entgegenhaltungen:
- EP-A1- 1 621 365
- JP-A- 3 169 711
- US-A- 3 722 440

## Beschreibung

Die Erfindung betrifft einen PKW-Fahrzeugluftreifen mit einer Innenschicht, mit einer Karkasse und mit einer Seitenwand, wobei die Innenschicht und die Kautschukmischungen der Karkasse und der Seitenwand zur Rollwiderstandssenkung des Fahrzeugluftreifens rußarm ausgelegt sind, so dass diese einen elektrischen Widerstand > 1*10⁸ Ohm aufweisen und wobei die Karkasse Festigkeitsträger aufweist, wobei zumindest ein Festigkeitsträger der Karkasse ein Hybridfestigkeitsträger ist, wobei dieser Hybridfestigkeitsträger aus wenigstens einem textilen elektrisch nicht-leitfähigen Multifilamentgarn und aus elektrisch leitfähigen Stahlfilamenten besteht.

Fahrzeugluftreifen werden aus unterschiedlichen Lagen aus Kautschukmischungen hergestellt und anschließend vulkanisiert, um die unterschiedlichen Lagen durch Vernetzungsreaktionen in einen gummielastischen Zustand zu überführen. Die Innenschicht kann aus einer Kautschukmischung oder einer diffusionsdichten Folie, wie z.B. im Stand der Technik der EP 0761 478 B1, EP 0774 340 B1, EP 0960 039 A1 und EP 1424 219 A1 beschrieben, bestehen. Einige von den Kautschuklagen weisen Festigkeitsträger auf, die zumeist parallel zueinander in dieser Lage in Kautschuk eingebettet angeordnet sind. Die Karkasse ist eine von den vorgenannten, Festigkeitsträger aufweisenden Kautschuklagen.

In PKW-Radialreifen verlaufen die Festigkeitsträger der meist einlagigen Karkasslage in radialer Richtung. Die Festigkeitsträger in Karkasslagen müssen eine ausreichende Festigkeit aufweisen, um die im Betrieb des Reifens auftretenden Kräfte hinreichend aufnehmen zu können und dauerhaltbar zu sein. Insbesondere leistet die Karkasse Widerstand gegen den Innendruck des Reifens und hat die Funktion eines Festigkeitsträgers. Der radiale Verlauf der Verstärkungskorde erhöht die Festigkeitseigenschaften der Lage, erhöht insbesondere die Tragfähigkeit und die Komfortmerkmale des Reifens wie Einfederung und Fahreigenschaften. Die Karkasse weist bevorzugt Korde aus Rayon oder PET auf, die elektrisch nicht-leitfähig sind. Korde aus Stahl sind für die Verwendung in der Karkasse von PKW-Luftreifen ungeeignet, weil die Stahlkorde durch während des Fahrbetriebes auftretende Belastungen brechen könnten.

Um die im Betrieb des Reifens auftretende elektrostatische Aufladung ableiten zu können, sind der mit der Fahrbahnoberfläche in Kontakt tretende Kopfbereich samt Laufstreifen, der mit der Reifenfelge in Kontakt tretende Wulstbereich und wenigstens ein Bauteil, wie Innenschicht, Karkasse oder Seitenwand, welche den Kopfbereich (direkt oder über weitere Bauteile) und den Wulstbereich miteinander verbindet, elektrisch leitfähig gestaltet. Dieses kann beispielsweise durch die Verwendung elektrisch leitfähiger Kautschukmischungen erfolgen. Elektrisch leitfähig bedeutet, dass der Reifen einen elektrischen Widerstand von höchstens 1 x 10⁸ Ohm aufweist.

Die Reifenentwicklung geht beständig dahin, den Rollwiderstand des Reifens zu senken. Ein Ansatz, den Rollwiderstand zu senken, ist der Einsatz rollwiderstandsarmer Kautschukmischungen. Diese werden bevorzugt als sogenannte "Body-Mischungen" im Seitenwandbereich, für die Innenschicht und/oder für die Karkasse eingesetzt. Die Hysterese dieser rollwiderstandsarmen Mischungen lässt sich vor allem durch den Einsatz niedriger aktiver Füllstoffe, geringerer Mengen an Füllstoff oder durch den Austausch von Ruß durch Silika verringern. Der Einsatz dieser rollwiderstandsarmen Mischungen führt jedoch zu einer Erhöhung des elektrischen Widerstandes dieser Mischungen, so dass die elektrische Leitfähigkeit sinkt. Die geforderte elektrische Leitfähigkeit des Gesamtreifens zur Ableitung der elektrostatischen Aufladung - die bisher durch die entsprechend elektrisch leitfähigen Kautschukmischungen geleitet wurde - kann nicht sicher gestellt werden.

Um diesen Nachteil zu beseitigen, ist es beispielsweise aus der EP 1 526 005 A2 und aus der EP 1 621 365 A1 bei rollwiderstandsoptimierten und unzureichend elektrisch leitfähigen Bodymischungen bekannt, leitfähige Korde in die üblicherweise kordfreie Seitenwand eines Reifens einzubringen, wobei die leitfähigen Korde zumindest vom Wulstbereich bis zum Gürtel geführt sind und mit elektrisch leitfähigen Kautschukmischungen des Wulstbereiches und des Kopfbereiches (wie Laufstreifen, Gürtel) die zur Ableitung der elektrostatischen Aufladung erforderliche Leitfähigkeit von Laufstreifen zur Felge sicherstellen. Nachteilig ist jedoch, dass diese leitfähigen Korde zusätzlich in den Reifen eingebracht werden müssen. Dieses ist in der Herstellung und in Bezug auf die Reifenkonstruktion aufwendig und teuer.

Aus der JP 3 169711 A ist es bekannt, Karkassfestigkeitsträger elektrisch leitfähig zu gestalten. Hierzu weist der aus organischem Multifilamentgarn bestehende Festigkeitsträger Wendeln aus Metallfilamenten auf. Die Metallfilamente sind aufgrund Ihrer Anordnung als Wendel an der äußeren Oberfläche des Festigkeitsträgers angeordnet, wodurch Nachteile in der Festigkeitsträger-/Gummianbindung entstehen können, weil das für das organische Multifilamentgarn ausgelegte Haftsystem üblicherweise Metall nicht ausreichend anbindet.

Der Erfindung liegt die Aufgabe zugrunde, einen Fahrzeugluftreifen bereitzustellen, der durch den Einsatz rußarmer Kautschukmischungen im Body-Bereich in seinem Rollwiderstand verbessert ist, der aber dennoch in der Herstellung und seiner Konstruktion einfach und kostengünstig ist.

Gelöst wird die Aufgabe gemäß dem Oberbegriff und dem kennzeichnenden Merkmal von Anspruch 1 dadurch, dass die Stahlfilamente zwischen 0,5 und 25 Gew% des Hybridfestigkeitsträgers einnehmen und dass die Stahlfilamente innerhalb des textilen, elektrisch nicht-leitfähigen Multifilamentgarnes angeordnet sind.

Erfindungswesentlich ist, dass der Karkassfestigkeitsträger durch die einfache Maßnahme der Zugabe von 0,5 bis 25 Gew% an Stahlfilamenten elektrisch leitfähig gestaltet ist. Es ist ein Hybridfestigkeitsträger geschaffen, der aus elektrisch nicht-leitfähigen und elektrisch leitfähigen Materialien besteht und die geforderte elektrische Leitfähigkeit des Reifens von < 1*10⁸ Ohm beim Einsatz von rußarmen Kautschukmischungen im Body-Bereich sicherstellt. Die Ableitung der elektrostatischen Aufladung von der Felge über den Wulst über die Karkassfestigkeitsträger bis zum elektrisch leitfähig gestalteten Kopfbereich des erfindungsgemäßen Reifens ist verbessert. Da die elektrisch leitfähigen Stahlfilamente maximal bis zu 25 Gew% des Festigkeitsträgers einnehmen und zwischen 75 bis 99,5 Gew% an nicht-elektrisch leitfähigem Material innerhalb des Festigkeitsträgers verbleibt, erfüllt der Karkassfestigkeitsträger die Anforderungen in Bezug auf die Kräfteaufnahme, Haltbarkeit und die elektrische Leitfähigkeit im Fahrbetrieb des erfindungsgemäßen Reifens. Dadurch, dass die Stahlfilamente innerhalb des Multifilamentgarnes integriert angeordnet sind, kann das übliche Haftsystem, welches die Haftung zwischen Festigkeitsträger und der sie einbettenden Kautschukmischung sicherstellt, weiterverwendet werden. Es sind keine Anpassungen bezüglich des Haftsystems erforderlich.

Es ist ein Fahrzeugluftreifen bereitgestellt, der durch den Einsatz rußarmer Kautschukmischungen im Body-Bereich in seinem Rollwiderstand verbessert ist, der aber dennoch in der Herstellung und seiner Konstruktion einfach und kostengünstig ist.

In einer vorteilhaften Weiterbildung der Erfindung ist vorgesehen, dass jedes Stahlfilament einen Durchmesser von 2µm bis 30µm, vorzugsweise zwischen 8 µm und 14 µm aufweist. Die elektrische Leitfähigkeit ist sichergestellt, die Gewichtszunahme durch die Stahlfilamente ist unwesentlich und die Eigenschaften der Stahlfilamente liegen dicht an den Eigenschaften des Filamentgarnes.

In einer weiteren vorteilhaften Weiterbildung der Erfindung ist vorgesehen, dass das Material des textilen elektrisch nicht-leitfähigen Multifilamentgarnes PES, PEN, POK, PEEK, Aramid, Arselon, PA, vorzugsweise PA6.6, PA6, PA10.10, Rayon oder Lyocell oder ein Hybridgarn aus den vorgenannten Materialien ist. Rayon oder PET sind das bisher für Karkassfestigkeitsträger eingesetzte Material. Rayon, Lyocell, PA10.10 und Naturfasern weisen zusätzlich zu ihrer Eignung als Karkassfestigkeitsträger den Vorteil auf, dass diese nicht auf fossilen Ressourcen basieren und somit umweltfreundlich sind.

In einer bestimmten vorgenannten Ausführungsform besteht der Hybridfestigkeitsträger zweckmäßigerweise aus einem einzigen Multifilamentgarn, welches mit 100 bis 600 t/m, vorzugsweise mit 250 bis 460 t/m verdreht ist und bei dem der Titer der textilen Filamente des Multifilamentgarnes zwischen 250 und 5000 dtex, vorzugsweise zwischen 940 und 3000 dtex beträgt.

In einer weiteren bestimmten Ausführungsform besteht der Hybridfestigkeitsträger aus zumindest zwei mit 100 bis 600 t/m vorverdrehten Multifilamentgarnen, wobei der Titer der textilen Filamente jedes Multifilamentgarns zwischen 250 und 5000dtex liegt, wobei die Multifilamentgarne mit 100 bis 600 t/m zu einem Hybridkord endverdreht sind und wobei zumindest in einem Multifilamentgarn elektrisch leitfähige Stahlfilamente angeordnet sind. Die Stahlfilamente sind innerhalb des Multifilamentgarnes integriert angeordnet, so dass das übliche Haftsystem, welches die Haftung zwischen Festigkeitsträger und der sie einbettenden Kautschukmischung sicherstellt, weiterverwendet werden kann. Es sind keine Anpassungen bezüglich des Haftsystems erforderlich.

## Patentansprüche

1. Fahrzeugluftreifen mit einer Innenschicht, mit einer Karkasse und mit einer Seitenwand, wobei die Innenschicht, die Kautschukmischungen der Karkasse und der Seitenwand zur Rollwiderstandssenkung des Fahrzeugluftreifens rußarm ausgelegt sind, so dass diese einen elektrischen Widerstand > 1*10⁸ Ohm aufweisen und wobei die Karkasse Festigkeitsträger aufweist, wobei zumindest ein Festigkeitsträger der Karkasse ein Hybridfestigkeitsträger ist, wobei dieser Hybridfestigkeitsträger aus wenigstens einem textilen elektrisch nicht -leitfähigen Multifilamentgarn und aus elektrisch leitfähigen Stahlfilamenten besteht, **dadurch gekennzeichnet, dass** die Stahlfilamente zwischen 0,5 und 25 Gew% des Hybridfestigkeitsträgers einnehmen und dass die Stahlfilamente innerhalb des textilen, elektrisch nicht-leitfähigen Multifilamentgarnes angeordnet sind.

2. Fahrzeugluftreifen nach Anspruch 1,
**dadurch gekennzeichnet, dass** jedes Stahlfilament einen Durchmesser von 2µm bis 30µm, vorzugsweise zwischen 8 µm und 14 µm aufweist.

3. Fahrzeugluftreifen nach Anspruch 1 oder 2,
**dadurch gekennzeichnet, dass** das Material des textilen elektrisch nicht-leitfähigen Multifilamentgarnes PES, PEN, POK, PEEK, Aramid, Arselon, PA, vorzugsweise PA6.6, PA6, PA10.10, Rayon oder Lyocell ist.

4. Fahrzeugluftreifen nach Anspruch 3, **dadurch gekennzeichnet, dass** dieser aus einem einzigen Multifilamentgarn besteht, welches mit 100 bis 600 t/m, vorzugsweise mit 250 bis 460 t/p verdreht ist und dass der Titer der textilen Filamente des Multifilamentgarnes zwischen 250 und 5000 dtex, vorzugsweise zwischen 940 und 3000 dtex beträgt.

5. Fahrzeugluftreifen nach Anspruch 3,
**dadurch gekennzeichnet, dass** dieser aus zumindest zwei mit 100 bis 600 t/m vorverdrehten Multifilamentgarnen besteht, dass der Titer der textilen Filamente jedes Multifilamentgarnes zwischen 250 und 5000dtex liegt, dass die Multifilamentgarne mit 100 bis 600 t/m zu einem Hybridkord endverdreht sind und dass zumindest in einem Multifilamentgarn elektrisch leitfähige Stahlfilamente angeordnet sind.

## Claims

1. Pneumatic tyre for a vehicle, with an inner layer, with a carcass and with a side wall, the inner layer and the rubber mixtures of the carcass and of the side wall being designed to be low in carbon black so as to lower the rolling resistance of the pneumatic tyre for a vehicle, so that these have an electrical resistance > 1*10⁸ Ohm, and the carcass having strengtheners, at least one strengthener of the carcass being a hybrid strengthener, this hybrid strengthener consisting of at least one textile electrically non-conductive multifilament yarn and of electrically conductive steel filaments, **characterized in that** the steel filaments occupy between 0.5 and 25% by weight of the hybrid strengthener, and **in that** the steel filaments are arranged within the textile electrically non-conductive multifilament yarn.

2. Pneumatic tyre for a vehicle according to Claim 1, **characterized in that** each steel filament has a diameter of 2 µm to 30 µm, preferably of between 8 µm and 14 µm.

3. Pneumatic tyre for a vehicle according to Claim 1 or 2, **characterized in that** the material of the textile electrically non-conductive multifilament yarn is PES, PEN, POK, PEEK, aramid, Arselon, PA, preferably PA6.6, PA6, PA10.10, rayon or Lyocell.

4. Pneumatic tyre for a vehicle according to Claim 3, **characterized in that** this consists of a single multifilament yarn which is twisted at 100 to 600 t/m, preferably at 250 to 460 t/p, and **in that** the titre of the textile filaments of the multifilament yarn amounts to between 250 and 5000 dtex, preferably between 940 and 3000 dtex.

5. Pneumatic tyre for a vehicle according to Claim 3, **characterized in that** this consists of at least two multifilament yarns pretwisted at 100 to 600 t/m, **in that** the titre of the textile filaments of each multifilament yarn lies between 250 and 5000 dtex, **in that** the multifilament yarns are finally twisted at 100 to 600 t/m into a hybrid cord, and **in that** electrically conductive steel filaments are arranged at least in one multifilament yarn.

## Revendications

1. Pneu de véhicule comprenant une couche interne, avec une carcasse et une paroi latérale, la couche interne, les mélanges de caoutchouc de la carcasse et la paroi latérale étant réalisés avec une faible teneur en suie afin d'abaisser la résistance au roulement du pneu de véhicule, de sorte que ceux-ci présentent une résistance électrique > 1*10⁸ ohm et la carcasse présentant des renforts, au moins un renfort de la carcasse étant un renfort hybride, ce renfort hybride se composant d'au moins un fil textile multifilament non conducteur électrique et de filaments d'acier électriquement conducteurs, **caractérisé en ce que** les filaments d'acier constituent entre 0,5 et 25 % en poids du renfort hybride et **en ce que** les filaments d'acier sont disposés à l'intérieur du fil textile multifilament non conducteur électrique.

2. Pneu de véhicule selon la revendication 1, **caractérisé en ce que** chaque filament d'acier présente un diamètre de 2 µm à 30 µm, de préférence compris entre 8 µm et 14 µm.

3. Pneu de véhicule selon la revendication 1 ou 2, **caractérisé en ce que** le matériau du fil textile multifilament non conducteur électrique est du PES, PEN, POK, PEEK, de l'aramide, de l'Arselon, du PA, de préférence du PA6.6, PA6, PA10.10, de la rayonne ou des fibres lyocell.

4. Pneu de véhicule selon la revendication 3, **caractérisé en ce que** celui-ci se compose d'un fil multifilament unique, qui est torsadé à une vitesse de 100 à 600 tr/m, de préférence de 250 à 460 tr/m et **en ce que** le titre des filaments textiles du fil multifilament est compris entre 250 et 5000 dtex, de préférence entre 940 et 3000 dtex.

5. Pneu de véhicule selon la revendication 3, **caractérisé en ce que** celui-ci se compose d'au moins deux fils multifilament pré-torsadés à une vitesse de 100 à 600 tr/m, **en ce que** le titre des filaments textiles de chaque fil multifilament est compris entre 250 et 5000 dtex, **en ce que** les fils multifilament sont torsadés définitivement à une vitesse de 100 à 600 tr/m pour former un cordon hybride et **en ce que** des filaments d'acier électriquement conducteurs sont disposés au moins dans un fil multifilament.
